# EUROPÄISCHE PATENTANMELDUNG

(11) **EP 2 803 435 A2**
(43) Veröffentlichungstag der Anmeldung: **19.11.2014**
(21) Anmeldenummer: 14159145.3
(22) Anmeldetag: 12.03.2014
(51) Int. Cl.: B23F 17/00, B23F 19/10

(54) **Verfahren zur Verzahnbearbeitung von Werkstücken**

(30) Priorität: 14.05.2013 DE 102013008214; 17.06.2013 DE 102013010246
(71) Anmelder: Liebherr-Verzahntechnik GmbH, 87437 Kempten (DE)
(72) Erfinder: Geiser, Dr. Hansjörg, 87487 Wiggensbach (DE)
(74) Vertreter: Laufhütte, Dieter

(57) **Zusammenfassung**

Bei der Erfindung handelt es sich um ein Verfahren zur Verzahnbearbeitung von Werkstücken auf einer Verzahnmaschine, wobei zum einen die Verzahnmaschine mindestens eine Hauptbearbeitungsstation und mindestens eine Nebenstation mit mindestens zwei Werkstückspindeln aufweist, wobei des Weiteren die beiden Werkstückspindeln abwechselnd in den Arbeitsbereich der Hauptbearbeitungsstation und der Nebenstation verfahren werden, wobei außerdem das Verfahren zur Verzahnbearbeitung von Werkstücken einen Feinverzahnschritt aufweist, bei welchem ein an einer der Werkstückspindeln angeordnetes Werkstück an einer Hauptbearbeitungsstation feinverzahnt wird, und wobei schließlich das Verfahren zur Verzahnbearbeitung von Werkstücken einen Nebenbearbeitungsschritt aufweist, bei welchem ein an einer der Werkstückspindeln angeordnetes Werkstück an einer Nebenstation durch Materialabtrag und/oder eine Materialumformung nebenbearbeitet wird, dadurch gekennzeichnet, dass jeweils für die Dauer der an der Hauptbearbeitungsstation durchgeführten Feinverzahnung an der Nebenstation keine Nebenbearbeitung erfolgt.

## Beschreibung

Die vorliegende Erfindung betrifft ein Verfahren zur Verzahnbearbeitung von Werkstücken auf einer Verzahnmaschine, welche wenigstens eine Hauptbearbeitungsstation, mindestens eine Nebenstation und mindestens zwei verfahrbare oder verschwenkbare Werkstückspindeln aufweist die entweder auf einem gemeinsamen Werkstückspindelträger angeordnet oder aber unabhängig voneinander verfahrbar sind. Dabei werden die beiden Werkstückspindeln durch ein Verschwenken des Werkstückspindelträgers oder durch Verfahren der Werkstückspindeln abwechselnd in den Arbeitsbereich der Hauptbearbeitungsstation und der Nebenstation bewegt.

Ein solches Verfahren ist aus der Druckschrift DE 10 2006 044738 B3 bekannt. Dabei wird in einem Produktionsprozess an einer Beladeposition eine der Werkstückspindeln beladen, während gleichzeitig an der zweiten Werkstückspindel ein erster Grobfräsprozess mit einem Verzahnungsfräswerkzeug ausgeführt wird. Nach Beendigung des ersten Fräsprozesses wird die Position der beiden Werkstückspindeln getauscht, indem der Werkstückspindelhalter um seine Hauptdrehachse gedreht wird. Das grob bearbeitete Werkstück kommt so von der Fräsposition in die Beladeposition, während das unbearbeitete Werkstück sich anschließend in der Hauptbearbeitungsposition befindet.

Nun wird an der Werkstückspindel in der Beladeposition ein Anfasprozess durchgeführt, bei welchem ein oder mehrere Wälzentgratwerkzeuge eingesetzt werden. Durch diesen Anfasprozess wird Werkstückmaterial, welches sich im Bereich der Stirnkante der Verzahnung befindet, nach außen auf die Stirnflächen der Verzahnung verdrängt. Dort wird dieses Material durch auf den Stirnseiten der Verzahnung anliegende Entgratscheiben abgeschert. Ein weiterer Anteil dieses Werkstückmaterials wird in die Zahnflanke gedrückt. Gleichzeitig zu dem Anfasprozess findet auf der anderen Werkstückspindel der Grobfräsprozess des anderen Werkstücks statt.

Nach einer erneuten Drehung des Werkstückspindelhalters um seine Hauptachse befindet sich die Werkstückspindel mit dem inzwischen entgrateten Werkstück wieder an der Hauptbearbeitungsstation, wo es einem Feinfräsprozess unterzogen wird. Dieser Schritt dient dazu, Werkstückmaterial, welches durch den Wälzentgratprozess in die Zahnflanke gedrückt wurde, in einem abschließenden Schlichtschnitt zu entfernen. Parallel zu diesem Feinfrässchnitt wird das auf der anderen Werkzeugspindel angeordnete, grob gefräste Werkstück wälzentgratet.

Ist der Schlichschnitt und der Wälzentgratprozess beendet, tauschen die zwei Werkstückspindeln durch eine weitere Drehbewegung des Werkstückspindelhalters wieder ihre Position. Nun wird das feinbearbeitete und damit fertige Werkstück von einer externen Ladeeinrichtung gegen ein unverzahntes Werkstück ersetzt, während gleichzeitig auf der anderen Spindel das wälzentgratete Werkstück dem abschließenden Feinverzahnschnitt unterzogen wird. Anschließend beginnt diese Prozessabfolge wieder von vorne.

Nachteilig bei dieser aus der DE 10 2006 044738 B3 bekannten Prozessführung ist es, dass sich die jeweiligen Prozesse, welche auf die Werkstückspindeln bzw. auf die dort angeordneten Werkstücke einwirken, bedingt durch die Anordnung der beiden Werkstückspindeln auf einem gemeinsamen Werkstückspindelhalter jeweils gegenseitig beeinflussen. Vor allem der Wälzentgratprozess wirkt dabei negativ. Bei diesem Prozess handelt es sich um einen Umformprozess, der radial auf das an der Werkstückspindel aufgespannte Werkstück wirkt. Dies führt wiederum zu einer radialen Kraft auf die Werkstückspindel, welche sich über den gemeinsamen Werkstückspindelhalter auch auf die andere Werkstückspindel auswirkt.

Solange dort nur der Grobverzahnschritt stattfindet, ist dies nicht weiter von Bedeutung, da Verzahnungsfehler, die in diesem Prozessschritt entstehen, durch den abschließenden Feinverzahnschritt wieder entfernt würden. Findet dort aber der abschließende Feinverzahnschnitt statt, zeigen sich die Einflüsse in Form von Verzahnungsfehlern an dem Werkstück.

Gemäß der DE 102006044738B3 sollen diese Einflüsse des Wälzentgratens dadurch verhindert werden, dass gleichzeitig mit zwei Wälzentgratwerkzeugen jeweils von gegenüberliegenden Seiten auf das Werkstück eingewirkt wird. Dies ist jedoch mit einem deutlich erhöhten Aufwand verbunden, da es sich bei den Wälzentgratwerkzeugen um sehr aufwändige Werkzeuge handelt, so dass mit einer beträchtlichen Investition für die doppelte Werkzeuganzahl je Werkstücktyp gerechnet werden muss. Außerdem muss die Wälzentgrateinrichtungsaufnahme der Wälzentgratwerkzeuge doppelt ausgeführt werden, da gleichzeitig immer zwei Werkzeug im Einsatz sind. Weiterhin kann diese Anordnung nicht gänzlich verhindern, dass Einflüsse aus dem Wälzentgratprozess sich auf den Feinverzahnprozess auswirken.

Werden die so verzahnten Werkstücke dabei ohne einen abschließenden Hartfeinbearbeitungsprozess eingesetzt, wirkt sich das aus der DE 102006044738B3 bekannte Verfahren qualitätsmindernd auf die fertige Verzahnung aus. Auch bei einem anschließenden Hartfeinbearbeitungsprozess könnte das Flankenaufmaß und auch die Flankengröße kleiner gewählt werden, wenn die Qualität der gefrästen Verzahnung besser wäre. Dann kann für den Hartfeinbearbeitungsprozess das Bearbeitungsaufmaß auf der Flanke geringer gewählt werden. Damit können die Fasen kleiner werden, und sind trotzdem nach der Hartfeinbearbeitung noch vorhanden und können ihre Schutzfunktion für die Kanten der Verzahnung wahrnehmen. Dies schont das Wälzentgratwerkzeug und die Umformkräfte zur Erzeugung der Fasen werden geringer.

Aufgabe der vorliegenden Erfindung ist es daher, ein Verfahren zur Verzahnbearbeitung zur Verfügung zu stellen, welches mit möglichst geringem konstruktivem Aufwand eine möglichst hohe Verzahnqualität zur Verfügung stellt.

Erfindungsgemäß wird diese Aufgabe durch ein Verfahren gemäß Anspruch 1 gelöst.

Die vorliegende Erfindung umfasst ein Verfahren zur Verzahnbearbeitung von Werkstücken auf einer Verzahnmaschine, welche mindestens eine Hauptbearbeitungsstation, mindestens eine Nebenstation und mindestens zwei Werkstückspindel aufweist. Insbesondere weist die Verzahnmaschine dabei mindestens zwei verfahrbare Werkstückspindeln auf, die entweder auf einem gemeinsamen, um eine Hauptschwenkachse verschwenkbaren Werkstückspindelhalter angeordnet und durch Verschwenken des Werkstückspindelhalters um die Hauptschwenkachse verfahrbar sind oder aber unabhängig voneinander verfahrbar sind, insbesondere durch lineares Verfahren oder Verschwenken der den Werkstückspindeln zugeordneten separaten Maschinentische. Dabei werden die beiden Werkstückspindeln abwechselnd in den Arbeitsbereich der Hauptbearbeitungsstation und der Nebenstation verfahren, insbesondere durch ein Verschwenken des Werkstückspindelhalters um die Hauptschwenkachse oder durch separates Verfahren der Werkstückspindeln. Das Verfahren zur Verzahnbearbeitung der Werkstücke weist dabei zum einen einen Feinverzahnschritt auf, bei welchem ein an einer der Werkstückspindeln angeordnetes Werkstück an der Hauptbearbeitungsstation feinverzahnt wird. Dabei handelt es sich bei der Feinverzahnung dabei um den Prozessschritt, welcher für die Qualität der Verzahnung bestimmend ist. Weiterhin umfasst das erfindungsgemäße Verfahren einen Nebenbearbeitungsschritt, bei welchem ein an einer der Werkstückspindeln angeordnetes Werkstück an der Nebenstation durch Materialabtrag und / oder eine Materialumformung nebenbearbeitet wird. Erfindungsgemäß ist dabei vorgesehen, dass jeweils für die Dauer der an der Hauptbearbeitungsstation durchgeführten Feinverzahnung an der Nebenstation keine Nebenbearbeitung erfolgt.

Erfindungsgemäß erfolgt der Nebenbearbeitungsschritt, bei welchem ein an einer der Werkstückspindeln angeordnetes Werkstück an der Nebenstation durch Materialabtrag und / oder eine Materialumformung nebenbearbeitet wird, damit entweder vor und / oder nach der Feinverzahnung, niemals jedoch gleichzeitig zur Feinverzahnung. Hierdurch wird ohne jeden konstruktiven Aufwand verhindert, dass die Nebenbearbeitung die Qualität der Feinverzahnung beeinflusst. Insbesondere erfolgt dabei für die Dauer der an der Hauptbearbeitungsstation durchgeführten Feinverzahnung an der Nebenstation keine Nebenbearbeitung, welche die durch die Feinverzahnung erreichbare Verzahnqualität beeinflussen würde.

Bei dem erfindungsgemäßen Verfahren kann an der Nebenstation oder an einer weiteren Nebenstation weiterhin ein Be- und / oder Entladeschritt durchgeführt werden, bei welchem ein fertig verzahntes Werkstück von einer Werkstückspindel entnommen wird und ein Rohling an der Werkstückspindel angeordnet wird.

Weiter kann bei dem erfindungsgemäßen Verfahren an der oder einer Nebenstation weiterhin ein Mess-, Positionier-, und/oder Markierzyklus stattfinden, während sich ein Werkstück an dieser Station befindet. So kann beispielsweise vor der Verzahnungsbearbeitung eine Positionieraufgabe stattfinden, bei dem das Werkstück passend zu einer Bohrung oder Referenzfläche positioniert wird. Weiterhin ist es möglich, das Werkstück nach der Verzahnungsbearbeitung zu vermessen, um so z.B. eine statistische Prozesskontrolle (SPC) durchzuführen.

Besonders bevorzugt wird dabei jeweils für die Dauer der an der Hauptbearbeitungsstation durchgeführten Feinverzahnung an der Nebenstation weder der Nebenbearbeitungsschritt durchgeführt, noch der Be- und / oder Entladeschritt.

Besonders bevorzugt kann dabei jeweils für die Dauer der an der Hauptbearbeitungsstation durchgeführten Feinverzahnung überhaupt keine mechanische Einwirkung auf die an der Nebenstation angeordnete Werkstückspindel und / oder auf das an diese angeordnete Werkstück erfolgen. Hierdurch wird jeder negative Einfluss auf die Feinverzahnung verhindert.

Das erfindungsgemäße Verfahren zur Verzahnbearbeitung von Werkstücken kann weiterhin einen Grobverzahnschritt aufweisen, bei welchem ein an einer der Werkstückspindeln angeordnetes Werkstück an der Hauptbearbeitungsstation grobverzahnt wird. Vorzugsweise werden an den Werkstücken dabei nacheinander ein Grobverzahnschritt und ein Feinverzahnschritt durchgeführt. Weiterhin bevorzugt erfolgt der Nebenbearbeitungsschritt zwischen dem Grobverzahnschritt und dem Feinverzahnschritt.

Das Grobverzahnen wird dabei auch als Schruppen bezeichnet, das Feinverzahnen als Schlichten.

Bevorzugt wird dabei bei Durchführung des erfindungsgemäßen Verfahrens während der an der Hauptbearbeitungsstation durchgeführten Grobverzahnung an der Nebenstation der Nebenbearbeitungsschritt und / oder der Be- und / oder Entladeschritt durchgeführt. Hierdurch können auch bei dem vorliegenden Verfahren kurze Prozesszeiten realisiert werden, da einige der Schritte des erfindungsgemäßen Verfahrens gleichzeitig ausgeführt werden. Da die Ausführung der Nebenprozesse wie beispielsweise der Nebenbearbeitung und / oder des Be- und Entladens jedoch nicht während des Feinverzahnschritts, sondern während des Grobverzahnschritts erfolgt, hat das erfindungsgemäße Verfahren keine Verschlechterung der Verzahnqualität zu Folge. Eventuelle Einflüsse der Nebenschritte auf den Grobverzahnschritt werden dabei durch den darauf folgenden Feinverzahnschritt wieder bereinigt.

In einer möglichen Ausführungsform des erfindungsgemäßen Verfahrens kann der Nebenbearbeitungsschritt dabei immer nur während des Grobverzahnschritts durchgeführt werden, und/oder während an der Hauptbearbeitungsstation keine Bearbeitung des dort angeordneten Werkstücks erfolgt.

Bevorzugt werden an der erfindungsgemäßen Verzahnmaschine mindestens zwei Werkstücke gleichzeitig bearbeitet, wobei die Werkstücke die einzelnen Bearbeitungsschritte nacheinander durchlaufen und zur Durchführung der jeweiligen Schritte durch ein Verfahren der Werkstückspindeln, insbesondere ein Verschwenken des Werkstückspindelträgers oder separates Verfahren der Werkstückspindeln von der Nebenstation zur Hauptbearbeitungsstation und zurück verfahren werden. Bevorzugt vertauschen die Werkstücke dabei bei jedem Verschwenken bzw. Verfahren der Werkstückspindel ihre Plätze.

Bei dem erfindungsgemäßen Verzahnverfahren kann es sich um ein Verzahnfräsverfahren handeln. Bei diesem wird das Werkstück an der Hauptbearbeitungsstation mit einem Fräswerkzeug bearbeitet. Insbesondere kann das Verzahnfräsverfahren dabei die Hauptbearbeitungsschritte Grobfräsen sowie Feinfräsen umfassen, und als an der Nebenstation durchgeführte Schritte das Ent- und Beladen der Werkstückspindeln, Mess- und Positionieraufgaben sowie als Nebenbearbeitungsschritt ein zeitlich untergeordneter mechanischer Bearbeitungsprozess wie z.B. das Entgraten, Bohren, Drehen oder Fräsen erfolgt. Wichtig ist dabei, dass dieser Nebenprozess nicht länger dauert als der Hauptbearbeitungsschritt. Insbesondere kann die Abfolge der Schritte dabei das Beladen der Werkstückspindel, ein Grobfräsen des Werkstücks, ein Entgraten des grobgefrästen Werkstücks, ein Feinfräsen und dann ein Entladen der Werkstückspindel umfassen. In möglichen Ausführungsformen der vorliegenden Erfindung handelt es sich bei dem Verzahnfräsverfahren um ein Wälzfräsverfahren oder um ein Profilfräsverfahren.

In einer alternativen Ausführung der vorliegenden Erfindung kann es sich bei dem vorliegenden Verfahren um ein Verzahnstoßverfahren handeln. Dabei werden die Werkstücke an der Hauptbearbeitungsstation durch ein Stoßwerkzeug verzahnt. Ein solches Verzahnstoßverfahren kann dabei die Hauptschritte Grobverzahnstoßen (in einem oder mehreren Schnitten) und Feinverzahnstoßen umfassen, und als an der Nebenstation durchgeführte Schritte das Ent- und Beladen der Werkstückspindeln, Mess- und Positionieraufgaben sowie als Nebenbearbeitungsschritt ein zeitlich untergeordneter mechanischer Bearbeitungsprozess wie z.B. das Entgraten, Bohren, Drehen oder Fräsen. Wichtig ist dabei, dass dieser Nebenprozess nicht länger dauert als der Hauptbearbeitungsschritt. Dabei wird ein nach dem ersten Grobverzahnschnitt durchgeführter weiterer Grobverzahnschnitt auch als Egalisieren bezeichnet. Die Reihenfolge des Verzahnstoßverfahrens kann dabei folgende sein: Beladen der Werkstückspindel, Grobverzahnstoßen, Entgraten, Egalisieren, Feinverzahnstoßen, und Entladen der Werkstückspindel. Bei dem Verzahnstoßverfahren handelt es sich bevorzugt um ein Wälzstoßverfahren.

Bei dem Entgratprozess handelt es sich bevorzugt um ein Drückentgraten. Alternativ kann jedoch auch ein Chamfer-Cut-Prozess oder ein Anfasfräsentgratprozess eingesetzt werden.

In einer ersten Variante der vorliegenden Erfindung kann das erfindungsgemäße Verfahren folgende Schritte aufweisen: Verfahren der Werkstückspindeln, insbesondere durch Verschwenken des Werkstückspindelhalters oder voneinander unabhängiges Verfahren der einzelnen Werkstückspindeln, so dass die erste Werkstückspindel in den Arbeitsbereich einer Hauptbearbeitungsstation und die zweite Werkstückspindel in den Arbeitsbereich einer Nebenstation gelangt, Feinverzahnen eines an der ersten Werkstückspindel aufgenommenen Werkstücks, ohne dass an der Nebenstation eine Nebenbearbeitung durchgeführt wird, und Verfahren der Werkstückspindeln, insbesondere durch Verschwenken des Werkstückspindelhalters oder Verfahren der einzelnen Werkstückspindeln, so dass die erste Werkstückspindel in den Arbeitsbereich der Nebenstation und die zweite Werkstückspindel in den Arbeitsbereich der Hauptbearbeitungsstation gelangt. Das erfindungsgemäße Verfahren erfordert damit gegenüber dem aus dem Stand der Technik bekannten Verfahren mindestens einen zusätzlichen Verfahrschritt, da während der Feinverzahnung an der Nebenstation keine Nebenbearbeitung durchgeführt wird. In einer besonders bevorzugten Ausführungsform wird während der Feinverzahnung auch kein Be- und / oder Entladen an der Nebenstation durchgeführt.

In einer ersten Variante umfasst dieses Verfahren dabei den weiteren Schritt des Entladens des feinverzahnten Werkstücks von der ersten Werkstückspindel und des Beladens der Werkstückspindel mit einem neuen Werkstück, ohne dass an der Hauptbearbeitungsstation ein Hauptbearbeitungsschritt durchgeführt wird. Erst nach einem erneuten Verfahren der Werkstückspindeln, insbesondere durch Verschwenken des Werkstückspindelhalters oder Verfahren der einzelnen Werkstückspindeln wird dann an der Hauptbearbeitungsstation ein Hauptbearbeitungsschritt durchgeführt, bevorzugt das Grobverzahnen des zuvor neu aufgenommenen Werkstücks.

Bei dieser Ausführungsvariante wird der zusätzliche Ent- und Beladeschritt benötigt, um trotz des Verzichts auf eine Bearbeitung an der Nebenstation während dem Feinverzahnen die einzelnen Schritte des Verfahrens an den beiden Stationen wieder in der vorgesehenen Reihenfolge durchführen zu können.

Sind die Werkstückspindel nicht auf einem gemeinsamen Werkstückspindelhalter angeordnet und können die Werkstückspindeln unabhängig voneinander zwischen den einzelnen Stationen verfahren werden, ergeben sich daraus zeitliche Vorteile, so dass z.B. die Spindeln schon neu positioniert werden können, wenn deren Bearbeitungsprozess abgeschlossen ist ohne das der eigentliche Hauptprozess beendet sein muss. Diese Variante der Prozessführung ist vor allem dann interessant, wenn auch der Hauptprozess aufgeteilt wird wie in der folgenden Ausführungsform beschrieben.

Dabei umfasst das Verfahren den weiteren Schritt des Entladens des feinverzahnten Werkstücks von der ersten Werkstückspindel und des Beladens der Werkstückspindel mit einem neuen Werkstück, während an der Hauptbearbeitungsstation zumindest ein Teil eines Hauptbearbeitungsschrittes durchgeführt wird. Hierdurch ergibt sich je nach Länge der einzelnen Schritte eine Beschleunigung des Verfahrens, da während des Entladens zumindest ein Teil eines Hauptbearbeitungsschrittes durchgeführt werden kann. Bevorzugt handelt es sich dabei zumindest um einen Teil eines Grobverzahnungsschritts.

Gemäß einer bevorzugten Ausführung der vorliegenden Erfindung kann ein an der Hauptbearbeitungsstation durchgeführte Hauptbearbeitungsschritt in zwei Teilschritte aufgeteilt werden, zwischen welchen die Werkstückspindeln verfahren werden, insbesondere indem der Werkstückspindelhalter verschwenkt wird oder die Werkstückspindeln einzeln verfahren werden. Insbesondere kann es sich bei dem Hauptbearbeitungsschritt, welcher in zwei Teilschritte aufgeteilt wird, um den Grobverzahnschritt handeln. Bevorzugt wird dabei der Hauptbearbeitungsschritt in zwei Teile aufgeteilt, um zwischen den beiden Teilschritten die Werkstückspindeln zu verfahren, insbesondere den Werkstückspindelhalter zu verschwenken oder die Werkstückspindeln einzeln zu verfahren und ein an der anderen Werkstückspindel angeordnetes Werkstück feinzuverzahnen. Durch diese Aufteilung eines Hauptbearbeitungsschrittes in zwei Teilschritte wird die Prozesszeit des Gesamtverfahrens je nach Länge der jeweiligen Schritte verringert, da durch die nun zweiteilige Durchführung des Hauptbearbeitungsschrittes, insbesondere des Grobverzahnens, gleichzeitig zu beiden Schritten jeweils an der Nebenstation Nebenschritte durchgeführt werden können.

Bevorzugt wird dabei während des ersten Teilschrittes die andere Werkstückspindel ent- und beladen, und während des zweiten Teilschrittes eine Nebenbearbeitung an der anderen Werkstückspindel durchgeführt, insbesondere ein Entgratprozess, oder umgekehrt.

Die vorliegende Erfindung macht sich dabei zu Nutze, dass es sich beim Grobverzahnschritt üblicherweise um den längsten Prozessschritt handelt. Durch die Aufteilung in zwei Teilschritte können somit zwei kürzere Nebenschritte an der Nebenstation durchgeführt werden, während jeweils der erste bzw. der zweite Teilschritt an der Hauptbearbeitungsstation durchgeführt werden.

Die Aufteilung kann dabei beispielsweise so erfolgen, dass bei dem ersten Teilschritt zumindest ein Teil des Anschnitts durchgeführt wird, bei welchem das Werkzeug in das Werkstück eintaucht. Bei dem zweiten Teilschritt kann es sich um einen Profilierschnitt handeln, bei welchem das Profil der Verzahnung auf dem Werkstück ausgebildet wird.

Der Hauptbearbeitungsschritt kann dabei auch in mehr als zwei Teilschritte aufgeteilt werden. Besonders bevorzugt wird er jedoch genau in zwei Teilschritte aufgeteilt.

In der Ausführungsform mit den unabhängig voneinander verfahrenbaren Werkstückspindeln wird versucht, die Teileprozesse an der Haupt- und Nebenbearbeitungsstation durch eine geschickte Prozessaufteilung zeitlich aufeinander abzustimmen um die unproduktiven Wartezeiten zu minimieren und so einen zeitlich optimierten Bearbeitungsprozess zu erhalten. Weiterhin ist es dabei möglich, die Anzahl der Haupt- und Nebenbearbeitungsstationen je nach Prozessanforderung unabhängig voneinander zu erhöhen. So kann beispielsweise eine Hauptbearbeitungsstation mit mehreren Nebenbearbeitungsstationen kombiniert werden, wobei auch eine umgekehrte Ausführungsform denkbar wäre.

In einer weiteren erfindungsgemäßen Ausführungsform kann das Verfahren folgende Schritte aufweisen: Verfahren der Werkstückspindeln, insbesondere durch Verschwenken des Werkstückspindelhalters oder Verfahren der einzelnen Werkstückspindeln, so dass die erste Werkstückspindel in den Arbeitsbereich der Hauptbearbeitungsstation und die zweite Werkstückspindel in den Arbeitsbereich der Nebenstation gelangt, Feinverzahnen eines an der ersten Werkstückspindel aufgenommenen Werkstücks und Durchführen der Nebenbearbeitung und / oder des Entund Beladeschritts an der Nebenstation in mindestens zwei sich nicht überlappenden Zeitintervallen, und Verfahren der Werkstückspindeln, insbesondere durch Verschwenken des Werkstückspindelhalters oder Verfahren der einzelnen Werkstückspindeln, so dass die erste Werkstückspindel in den Arbeitsbereich der Nebenstation und die zweite Werkstückspindel in den Arbeitsbereich der Hauptbearbeitungsstation gelangt. Bei diesem Verfahren erfolgen damit zwischen den zwei Verfahrschritten sowohl das Feinverzahnen, als auch die Nebenbearbeitung und / oder das Ent- und Beladen, d.h. sowohl an der Haupt-, als auch an der Nebenstation werden Schritte durchgeführt. Die Schritte erfolgen jedoch nicht zeitparallel, so dass die Nebenbearbeitung und / oder das Ent- und Beladen keinen negativen Einfluss auf die Feinverzahnung haben können. Bevorzugt erfolgen die jeweiligen Schritte dabei nacheinander. Beispielsweise kann dabei zunächst eine Feinverzahnung durchgeführt werden, und nach deren Beendigung an der anderen Werkstückspindel die Nebenbearbeitung und / oder das Ent- und Beladen.

Durch diesen Verfahrensablauf muss die Anzahl der Verfahrschritte gegenüber bekannten Verzahnverfahren nicht erhöht werden, was wieder den Prozessablauf beschleunigen kann.

Die vorliegende Erfindung umfasst neben den beschriebenen Verfahren weiterhin eine Verzahnmaschine mit wenigstens einer Hauptbearbeitungsstation, mindestens einer Nebenstation und mindestens zwei Werkstückspindeln. Insbesondere weist die Verzahnmaschine dabei mindestens zwei verfahrbare Werkstückspindeln auf, die entweder auf einem gemeinsamen, um eine Hauptschwenkachse verschwenkbaren Werkstückspindelhalter angeordnet und durch Verschwenken des Werkstückspindelhalters um die Hauptschwenkachse verfahrbar sind oder aber unabhängig voneinander verfahrbar sind, insbesondere durch lineares Verfahren oder Verschwenken von den Werkstückspindeln zugeordneten separaten Maschinentischen. Dabei sind die beiden Werkstückspindeln abwechselnd in den Arbeitsbereich der Hauptbearbeitungsstation und der Nebenstation verfahrbar, insbesondere durch ein Verschwenken des Werkstückspindelhalters um die Hauptschwenkachse oder durch separates Verfahren der Werkstückspindeln. Weiterhin umfasst die Verzahnmaschine eine Steuerung zur automatischen Durchführung eines Verfahrens, wie es oben beschrieben wurde. Die Steuerung der erfindungsgemäßen Verzahnmaschine implementiert damit ein Verfahren, wie es oben dargestellt wurde, automatisiert auf einer Verzahnmaschine.

Die vorliegende Erfindung umfasst weiterhin ein Computerprogramm, insbesondere ein auf einem Datenträger oder ein in einem Speicher gespeichertes Computerprogramm, welches Befehle zur automatisierten Durchführung eines erfindungsgemäßen Verfahrens umfasst, wie es oben beschrieben wurde. Insbesondere kann das erfindungsgemäße Computerprogramm dabei in die Steuerung einer Verzahnmaschine geladen werden, um ein erfindungsgemäßes Verfahren auf dieser zu implementieren.

Eine erfindungsgemäße Verzahnmaschine kann dabei so aufgebaut sein, dass an der Nebenstation sowohl eine Nebenbearbeitung, als auch das Be- und Entladen der Werkstücke erfolgt. Weiterhin kann der Werkstückspindelhalter mindestens zwei Schwenkpositionen aufweisen, wobei in der ersten Schwenkposition die erste Werkstückspindel im Arbeitsbereich der Hauptbearbeitungsstation und die zweite Werkstückspindel im Arbeitsbereich der Nebenstation angeordnet ist, und wobei in der zweiten Schwenkposition die erste Werkstückspindel im Arbeitsbereich der Nebenstation und die zweite Werkstückspindel im Arbeitsbereich der Hauptbearbeitungsstation angeordnet ist. Weiterhin kann vorgesehen sein, dass bei zwei Werkstückspindeln diese um 180° gegenüber der Hauptschwenkachse am Werkstückspindelhalter angeordnet sind.

Alternativ können für die Nebenbearbeitung und das Be- und Entladen der Werkstücke auch zwei separate Nebenstationen vorgesehen sein. Bevorzugt weist der Werkstückspindelhalter dabei mindestens drei Schwenkpositionen auf beziehungsweise können die verfahrbaren Werkstückspindeln an drei Positionen angehalten und positioniert werden. Selbstverständlich können auch zwei Hauptstationen mit einer Nebenstation, je nach den zeitlichen Prozessanforderungen, kombiniert werden.

Die Werkstückspindeln können dabei jeweils einen Antrieb aufweisen, mit welchem ein an der Werkstückspindel eingespanntes Werkstück um eine Drehachse gedreht werden kann. Gegebenenfalls können die Werkstückspindeln auch einen Gegenhalter aufweisen, welcher bevorzugt an dem Werkstückspindelhalter angeordnet ist.

Die Hauptbearbeitungsstation kann dabei einen Fräskopf, einen Stoßantrieb oder einen Schleifkopf mit den entsprechenden NC-Achsen aufweisen.

An der Nebenstation kann ein Werkzeug zur Nebenbearbeitung angeordnet sein, insbesondere ein Entgratwerkzeug, besonders bevorzugt ein Drückentgratwerkzeug. Alternativ oder zusätzlich kann an der Nebenstation eine Automation zur Beund Entladung der Werkstückspindel angeordnet sein.

Die vorliegende Erfindung wird nun anhand von Ausführungsbeispielen sowie Zeichnungen näher dargestellt.

Dabei zeigen:
- Fig. 1:: ein erstes Ausführungsbeispiel der vorliegenden Erfindung, bei welchem der Feinverzahnschritt zwischen zwei Verfahrbewegungen der Werkstückspindeln durchgeführt wird, ohne dass an der Nebenstation ein Prozess durchgeführt wird, und bei welchem zur Wiederherstellung der Reihenfolge der Prozessschritte während dem Be- und Entladen kein Prozessschritt an der Hauptbearbeitungsstation durchgeführt wird,
- Fig. 2:: ein zweites Ausführungsbeispiel eines erfindungsgemäßen Verfahrens, bei welchem ein Prozessschritt in zwei Teilschritte aufgeteilt wird, um einen größeren Anteil der Prozesszeiten sowohl an der Hauptbearbeitungsstation, als auch an der Nebenstation Prozesse durchführen zu können, und
- Fig. 3:: ein drittes Ausführungsbeispiel eines erfindungsgemäßen Verfahrens, bei welchem das Feinverzahnen und ein Prozessschritt an der Nebenstation zwar während des gleichen Verfahrzyklus durchgeführt werden, jedoch zeitversetzt,
- Fig. 4:: ein viertes Ausführungsbeispiel eines erfindungsgemäßen Verfahrens, bei welchem im Rahmen eines Verzahnungsstoßverfahrens vor dem Feinverzahnen noch ein zusätzlicher Grobverzahnschnitt durchgeführt wird, während welchem eine Nebenbearbeitung und/oder ein Be- und Entladen erfolgt.
- Fig. 5:: eine Übersicht über beispielhafte Maschinenkonzepte zur Ausführung des erfindungsgemäßen Verfahrens

Gemäß sämtlichen Ausführungsformen der vorliegenden Erfindung wird während der qualitätsbestimmten Prozessphase, d.h. dem Feinverzahnen, auf der anderen Werkstückspindel keine Bearbeitung durchgeführt, welche diesen Prozess negativ beeinflussen könnte. Abhängig von der Länge der einzelnen Prozessphasen und des konkret durchgeführten Verfahrens ergeben sich dabei zur Optimierung der gesamten Bearbeitungszeit unterschiedliche Prozessführungen.

Im Folgenden werden hierfür unterschiedliche Ausführungsbeispiele dargestellt. Im Ausführungsbeispiel wird das Vorgehen dabei anhand des Wälzfräsens dargestellt, bei welchem die einzelnen Verfahrensschritte Schruppen, d.h. die Grobverzahnung, Entgraten, insbesondere Wälzentgraten, Schlichten, d.h. die Feinverzahnung, sowie Be- und Entladen durchgeführt werden. Zwischen den einzelnen Schritten liegt dabei mindestens ein Wechsel der Werkstückspindelhalterposition. Die Abfolge ist dabei Be- und Entladen, Schruppen, Entgraten, Schlichten und wiederum Be- und Entladen.

Die vorliegende Erfindung kann jedoch in gleicher Weise auch für das Wälzstoßen eingesetzt werden. Bei diesem Verfahren ergibt sich ein zusätzlicher Verfahrensschritt, nämlich das Egalisieren. Die Abfolge der Prozessschritte ist dabei Schruppen, Egalisieren, Schlichten und dann Wälzentgraten, sowie das Be- und Entladen.

Durch eine geschickte Kombination der Prozessabläufe, unter Beachtung der Einschränkungen, dass während der Phase der Qualitätsbildung kein Bearbeitungsprozess auf der anderen Spindel stattfindet, ergeben sich so unterschiedliche Prozessvarianten.

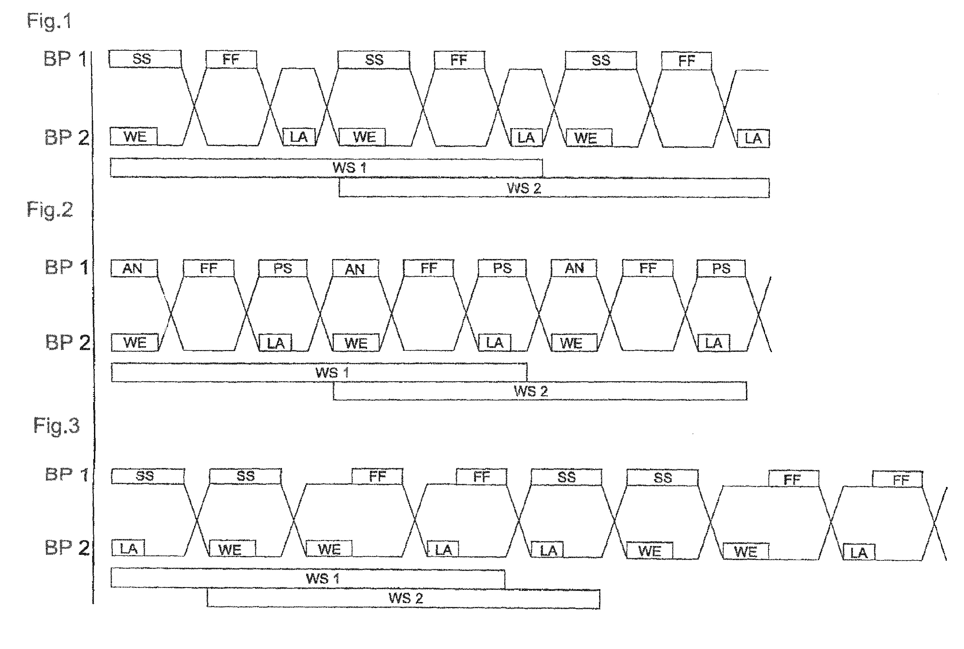

Beim Wälzfräsen dauert dabei der Schruppprozess, d.h. das Grobfräsen, üblicherweise am längsten. Bei den in Fig. 1 und 2 dargestellten Prozessvarianten wird daher der Entgratprozess, insbesondere ein Wälzentgratprozess, jeweils während des Schruppschnittes durchgeführt. Der Schlichtschnitt wird dagegen separat durchgeführt, um diesen Prozess nicht durch einen parallel ablaufenden Prozess zu beeinflussen.

Bei dem in Fig. 1 dargestellten Ausführungsbeispiel wird dabei an dem üblichen Prozessablauf im Hinblick auf die Reihenfolge der durchgeführten Prozessschritte nichts geändert. Vielmehr erfolgt auch hier im Bezug auf jede einzelne Werkstückspindel ein Be- und Entladen (LA), eine Grobverzahnung (SS), ein Entgraten (WE), eine Feinverzahnung (FF) und wiederum ein Be- und Entladen (LA). Dadurch, dass das Entgraten (WE) jedoch immer nur während der Grobverzahnung (SS) durchgeführt wird, nicht dagegen während der Feinverzahnung (FF), kann das Entgraten nicht in direktem Anschluss an das Grobverzahnen (SS) erfolgen. Vielmehr wird während der Feinverzahnung eines Werkstücks an der einen Werkstückspindel an der anderen Werkstückspindel kein Prozessschritt durchgeführt, woraufhin durch ein Drehen des Werkstückspindelhalters bzw. Verfahren der Werkstückspindeln das fertige Werkstück in die Nebenposition verfahren wird, wo dieses entnommen wird. Da das an der anderen Werkstückspindel angeordnete Werkstück jedoch bereits grobverzahnt ist, kann auch während dem Be- und Entladeschritt keine weitere Hauptbearbeitung durchgeführt werden. Vielmehr erfolgen erst nach einem weiteren Positionswechsel der Werkstückspindeln nun gleichzeitig ein Grobverzahnungsschritt an dem neu aufgenommenen Werkstück und ein Entgratschritt an dem grobverzahnten Werkstück. Bei dieser Prozessführung werden damit nur das Grobverzahnen (SS) und das Entgraten (WE) gleichzeitig durchgeführt.

Die Prozesse lassen sich besser zeitoptimal verteilen, wenn einer der Prozesse unterbrochen wird, wenn ein anderer Prozess fertig ist. Der unterbrochene Prozess kann dann wieder fortgesetzt werden, wenn die Werkstückspindel wieder an diese Bearbeitungsposition kommt. Dies ist nicht weiter problematisch, da an beiden Werkstückspindeln die Werkstückposition bekannt ist und bedingt durch die Wälzkopplung auch die Position des Werkzeuges relativ zum Werkstück. Es ist problemlos möglich, an der Position weiterzuarbeiten, an welcher vorher aufgehört wurde. Bevorzugt wird dabei der Grobverzahnschritt in zwei Teilschritte aufgeteilt. Sollte es in diesem Fall lastbedingt zu kleinen Abweichungen auf der Zahnflanke kommen, werden diese beim Feinbearbeitungsprozess, d.h. beim Feinverzahnen, beseitigt.

Das Grobverzahnen, d.h. der Schruppschritt, setzt sich dabei zusammen aus einem Anschnitt (AN), bei dem der Fräser in das Werkstück eintaucht, und einem Profilierschnitt (PS), bei dem das Profil der Verzahnung ausgebildet wird. Je nach Schräge der Verzahnung kann dabei das Verhältnis von Anschnittweg und dem Weg für die Profilausbildung variieren. Bei Schrägverzahnungen mit großen Schrägungswinkeln kann dabei der Anschnittweg häufig deutlich länger sein als der Weg für die Profilausbildung.

Bei dem in Fig. 2 gezeigten Ausführungsbeispiel wird der am längsten laufende Schruppschritt daher in zwei Teilprozessschritten durchgeführt, einen Anschnittprozess (AN) und einen Profilierschnittprozess (PS). Hierdurch ist es anders als in Fig. 1 gezeigt möglich, auch während dem Be- und Entladevorgang an der Hauptbearbeitungsstation zu arbeiten.

So erfolgt im Ausführungsbeispiel während dem Entgratschritt (WE) jeweils ein Anschnittprozess (AN), während während dem Be- und Entladeschritt der Profilschnitt-Prozess (PS) durchgeführt wird.

Die Länge des ersten und des zweiten Teilschrittes des Grobverzahnens kann dabei je nach der Zeitdauer, welche für das Entgraten bzw. das Be- und Entladen nötig wird, angepasst werden. Dabei ist selbstverständlich nicht notwendig, dass während des ersten Teilprozesses nur der Anschnitt erfolgt, und dass während des zweiten Prozesses nur ein Profilschnitt erfolgt. Vielmehr können beliebige Anteile des Grobverzahnens in den ersten Teilschritt bzw. den zweiten Teilschritt aufgeteilt werden.

Ziel der Optimierung ist hier, dass möglichst lange gleichzeitig auf beiden Bearbeitungspositionen gearbeitet werden kann, während der Schlichtschnitt als einziger Prozess ohne eine Parallelbearbeitung an der anderen Spindel stattfindet.

Bei dem in Fig. 3 gezeigten Ausführungsbeispiel finden dagegen der Schlichtschnitt (FF) und ein weiterer Prozess nacheinander statt, ohne dass zwischendurch ein Wechsel der Bearbeitungsposition stattfindet. Dies führt bei den im Ausführungsbeispiel dargestellten Prozesszeiten zu den kürzesten Bearbeitungszeiten für zwei Werkstücke.

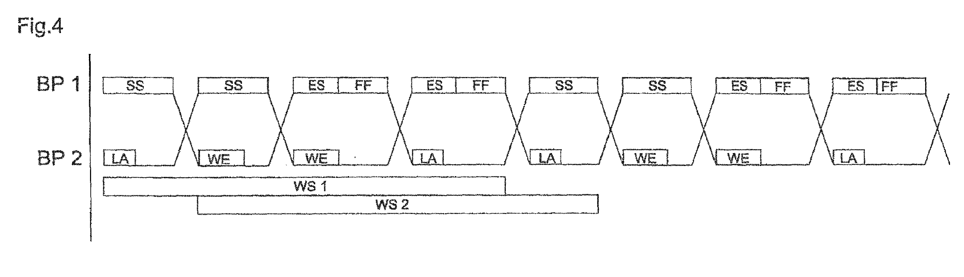

In Fig. 4 ist ein Ausführungsbeispiel gezeigt, bei welchem im Rahmen eines Verzahnstoßverfahrens, insbesondere eines Wälzstoßverfahrens, vor der Feinverzahnung (FF) ein zweiter Grobverzahnungsschnitt durchgeführt wird, ein sog. Egalisierschnitt (ES). Die beiden Schnitte erfolgen dabei nacheinander an der Hauptbearbeitungsstation, ohne dass ein Verschwenken des Werkstückspindelhalters bzw. Verfahren der Werkstückspindeln erfolgen würde. Auch hier wird darauf geachtet, dass während der Feinverzahnung kein anderer Prozess stattfindet, um eine Beeinflussung der Feinverzahnung zu vermeiden. Dies wirkt sich jedoch nur unwesentlich auf die gesamte Zykluszeit aus, da während des Anfasschritts (WE) und/oder des Be- und Entladens (LA) der zusätzliche Egalisierschnitt (ES) erfolgt.

Welche Prozessvariante dabei optimale Ergebnisse erzielt, hängt insbesondere auch von der Länge der einzelnen Teilprozesse, sowie von der Anzahl der Schnitte ab. Bei Wälzstoßprozessen finden im Gegensatz zu Wälzfräsprozessen üblicherweise drei oder mehr Schnitte statt, bis das Werkstück fertiggestellt ist. Auch hier ergeben sich viele Möglichkeiten der Prozessführung, um möglichst kurze Bearbeitungszeiten zu erreichen.

Entscheidend ist jedoch auch hier, dass während des qualitätsbestimmenden Schlichtprozess keine Beeinflussung durch einen zweiten Prozess auf der anderen Bearbeitungsposition stattfindet.

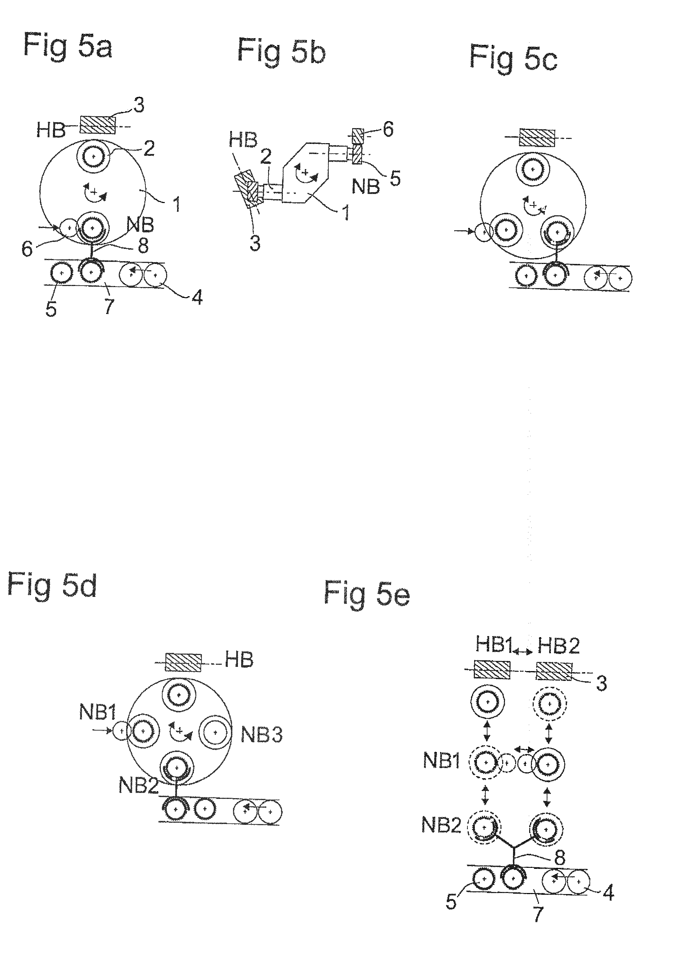

In der Fig. 5 sind verschiedene mögliche Konzepte dargestellt mit einer unterschiedlichen Anzahl an Werkstückspindeln. Sie unterscheiden sich durch Konzepte, bei denen die Werkstückspindeln auf einem gemeinsamen Werkstückspindelträger montiert sind (Fig. 5a bis 5d) und solchen, bei denen die Werkstückspindeln unabhängig voneinander verfahren werden können (Fig. 5e).

Die Fig. 5a und 5b zeigen exemplarisch Varianten mit zwei Werkstückspindeln auf einem Spindelträger, wobei die Hauptachse des Spindelträgers parallel bzw. rechtwinklig zu den Achsen der Werkstückspindeln angeordnet ist.

### Abkürzungsverzeichnis:

- SS:: Schruppschnitt (Grobverzahnung)
- FF:: Schlichtschnitt (Feinverzahnung)
- WE:: Entgraten, insbesondere Wälzentgraten
- LA:: Be- und Entladen
- AN:: Anschnitt
- PS:: Profilierschnitt
- WS1:: Werkstück 1
- WS2:: Werkstück 2
- ES:: Egalisierschnitt (beim Stoßen)
- HB:: Hauptbearbeitungsposition
- NB: Nebenbearbeitungsposition

- 1: Werkstückspindelhalter
- 2: Werkstückspindel
- 3: Werkzeug
- 4: Rohteil
- 5: Fertigteil
- 6: Entgratwerkzeug
- 7: Externe Automation
- 8: Ladesystem

## Patentansprüche

1. Verfahren zur Verzahnbearbeitung von Werkstücken auf einer Verzahnmaschine,
wobei die Verzahnmaschine mindestens eine Hauptbearbeitungsstation und mindestens eine Nebenstation sowie mindestens zwei Werkstückspindeln aufweist,
wobei die beiden Werkstückspindeln abwechselnd in den Arbeitsbereich der Hauptbearbeitungsstation und der Nebenstation verfahren werden,
wobei das Verfahren zur Verzahnbearbeitung von Werkstücken einen Feinverzahnschritt aufweist, bei welchem ein an einer der Werkstückspindeln angeordnetes Werkstück an der Hauptbearbeitungsstation feinverzahnt wird, und wobei das Verfahren zur Verzahnbearbeitung von Werkstücken einen Nebenbearbeitungsschritt aufweist, bei welchem ein an einer der Werkstückspindeln angeordnetes Werkstück an der Nebenstation durch Materialabtrag und/oder eine Materialumformung nebenbearbeitet wird,
**dadurch gekennzeichnet,**
**dass** jeweils für die Dauer der an der Hauptbearbeitungsstation durchgeführten Feinverzahnung an der Nebenstation keine Nebenbearbeitung erfolgt.

2. Verfahren nach Anspruch 1, wobei das Verfahren zur Verzahnbearbeitung von Werkstücken weiterhin einen Grobverzahnschritt aufweist, bei welchem ein an einer der Werkstückspindeln angeordnetes Werkstück an einer Hauptbearbeitungsstation grobverzahnt wird, wobei während der an der Hauptbearbeitungsstation durchgeführten Grobverzahnung an einer Nebenstation ein Nebenbearbeitungsschritt und/oder ein Be- und/oder Entladeschritt durchgeführt wird.

3. Verfahren nach einem der vorangegangenen Ansprüche, wobei es sich um ein Verzahnfräsverfahren handelt, mit den Hauptbearbeitungsschritten Grobfräsen und Feinfräsen und den Nebenschritten Ent- und Beladen einer Werkstückspindel und Entgraten, oder wobei es sich um ein Verzahnstoßverfahren handelt, mit den Hauptschritten Grobverzahnstoßen, Egalisieren und Feinverzahnstoßen und den Nebenschritten Ent- und Beladen einer Werkstückspindel und Entgraten.

4. Verfahren nach einem der vorangegangenen Ansprüche, mit den Schritten:
Verfahren der Werkstückspindeln, so dass die erste Werkstückspindel in den Arbeitsbereich der Hauptbearbeitungsstation und die zweite Werkstückspindel in den Arbeitsbereich der Nebenstation gelangt,
Feinverzahnen eines an der ersten Werkstückspindel aufgenommenen Werkstücks, ohne dass an der Nebenstation eine Nebenbearbeitung durchgeführt wird, und
Verfahren der Werkstückspindeln, so dass die erste Werkstückspindel in den Arbeitsbereich der Nebenstation und die zweite Werkstückspindel in den Arbeitsbereich der Hauptbearbeitungsstation gelangt.

5. Verfahren nach Anspruch 4, mit den weiteren Schritten:
Entladen des feinverzahnten Werkstücks von der ersten Werkstückspindel und Beladen der Werkstückspindel mit einem neuen Werkstück, ohne dass an der Hauptbearbeitungsstation ein Hauptbearbeitungsschritt durchgeführt wird.

6. Verfahren nach Anspruch 4, mit den weiteren Schritten:
Entladen des feinverzahnten Werkstücks von der ersten Werkstückspindel und Beladen der Werkstückspindel mit einem neuen Werkstück, während an der Hauptbearbeitungsstation zumindest ein Teil eines Hauptbearbeitungsschrittes durchgeführt wird.

7. Verfahren nach einem der vorangegangenen Ansprüche, wobei ein an der Hauptbearbeitungsstation durchgeführter Hauptbearbeitungsschritt, insbesondere ein Grobverzahnschritt, in zwei Teilschritte aufgeteilt wird, zwischen welchen die Position der Werkstückspindeln getauscht wird, insbesondere um ein auf der anderen Werkstückspindel angeordnetes Werkstück feinzuverzahnen, wobei der Hauptbearbeitungsschritt vorzugsweise in einen ersten Teilschritt, bei welchem ein Anschnitt durchgeführt wird, und einen zweiten Teilschritt, bei welchem ein Profilierschnitt durchgeführt wird, aufgeteilt wird.

8. Verfahren nach einem der vorangegangenen Ansprüche, mit den Schritten:
Verfahren der Werkstückspindeln, so dass die erste Werkstückspindel in den Arbeitsbereich der Hauptbearbeitungsstation und die zweite Werkstückspindel in den Arbeitsbereich der Nebenstation gelangt,
Feinverzahnen eines an der ersten Werkstückspindel aufgenommenen Werkstücks und Durchführen der Nebenbearbeitung und/oder des Ent- und Beladeschritts an der Nebenstation in mindestens zwei sich nicht überlappenden Zeitintervallen, insbesondere nacheinander,
und
Verfahren der Werkstückspindeln, so dass die erste Werkstückspindel in den Arbeitsbereich der Nebenstation und die zweite Werkstückspindel in den Arbeitsbereich der Hauptbearbeitungsstation gelangt.

9. Verzahnmaschine mit einer Hauptbearbeitungsstation, einer Nebenstation sowie mindestens zwei Werkstückspindeln, wobei die beiden Werkstückspindeln abwechselnd in den Arbeitsbereich einer der Hauptbearbeitungsstation und einer der Nebenstationen verfahrbar sind,
und mit einer Steuerung zur automatisierten Durchführung eines Verfahrens nach einem der vorangegangenen Ansprüche.

10. Computerprogramm, insbesondere auf einem Datenträger oder in einem Speicher gespeichertes Computerprogramm, mit Befehlen zur automatisierten Durchführung eines Verfahrens nach einem der vorangegangenen Ansprüche.
